# EUROPEAN PATENT APPLICATION

(11) **EP 4 708 007 A1**
(43) Date of publication of application: **11.03.2026**
(21) Application number: 25792573.5
(22) Date of filing: 11.04.2025
(51) Int. Cl.: G06F 3/041, G06F 1/16, H10H 20/858, G02F 1/1333

(54) **CURVED DISPLAY DEVICE HAVING BEZELLESS STRUCTURE**

(30) Priority: 11.07.2024 KR 20240091550; 02.09.2024 KR 20240118819; 31.03.2025 KR 20250041608
(71) Applicant: Chemtronics Co., Ltd., Sejong 30010 (KR)
(72) Inventor: JEONG, Hyo Jun, Suwon-si, Gyeonggi-do 16677 (KR); YOO, Sung Jae, Suwon-si, Gyeonggi-do 16677 (KR); HAN, Seong Deok, Suwon-si, Gyeonggi-do 16677 (KR)
(74) Representative: RGTH
(86) International application number: PCT/KR2025/004985
(87) International publication number: WO 2026/014663

(57) **Abstract**

The present disclosure relates to a curved display device having a planar portion and a curved portion, and having separate display panels for the planar portion and the curved portion while the display technology of the display panel for the planar portion and the display technology of the display panel for the curved portion are different.

## Description

### TECHNICAL FIELD

The present disclosure relates to a display device that supports touch operation, and more particularly to a curved display device that has a planar portion and a curved portion and that utilizes separate display panels for the planar portion and the curved portion.

### BACKGROUND ART

Devices with large screens beyond the size of portable devices, which are combined with on-screen touch input technology, have been attracted attention as devices that may enable immediate and easy interaction with users. In addition, LED technology, which is unlike LCD technology in the display field, is attracting attention because it requires no additional light source, is thin, and may be easily applied even if the screen is not flat. Meanwhile, devices that offer an extended touch area may be considered to increase operability. For this purpose, devices with screens that eliminate lateral bezels, extend from the lateral sides, and have curved edges may be considered.

### SUMMARY OF INVENTION

### Technical Problem

A technical aspect of the present disclosure is to provide a curved display device that utilizes separate display panels for the planar portion and curved portion, while still achieving a bezel-less structure and improved support stability for the coverglass.

### Solution to Problem

A curved display device according to one embodiment of the present disclosure, may comprise: a coverglass comprising: a planar portion; and a curved portion that extends from each of a pair of opposite edges of the planar portion and is bent toward a direction in which a bottom surface of the planar portion faces; a housing provided under the coverglass and providing a receiving space; a main display module received in the housing, provided under the planar portion, and comprising a main display panel; and an auxiliary display module received in the housing, provided under the curved portion, and comprising an auxiliary display panel,, wherein the main display panel and the auxiliary display panel at least partially overlap with each other, and wherein the coverglass comprises: a touch-sensing layer provided on a bottom surface of the coverglass and covering the planar portion and at least a portion of the curved portion.

In a curved display device according to one embodiment of the present disclosure, the coverglass may have longitudinal edges and transverse edges, wherein each of the longitudinal edge is an edge of the curved portion, wherein the housing comprises a bracket, and wherein the bracket covers at least portions of side portions corresponding to the transverse edges.

In a curved display device according to one embodiment of the present disclosure, the bracket may cover side surfaces of the transverse edges, extends from each of the side surfaces of the transverse edges to protrude above a top surface of the coverglass, and is bent toward a center portion of the coverglass to cover at least a portion of the top surface of the coverglass.

In a curved display device according to one embodiment of the present disclosure, the housing further may comprise: a backcover disposed at a bottom surface of the curved display device, and wherein the backcover is in contact with and fastened with the bracket.

In a curved display device according to one embodiment of the present disclosure, the main display module further may comprise: a panel module case supporting the main display panel and enclosing a lower portion of the main display panel, and wherein the panel module case is joined to the bracket.

In a curved display device according to one embodiment of the present disclosure, the housing further may comprise: a module case support provided between the panel module case and the bracket and joined to the panel module case and the bracket.

In a curved display device according to one embodiment of the present disclosure, the auxiliary display module further may comprise: an auxiliary display guide supporting a bottom surface of the auxiliary display panel and supporting a bottom surface of at least a portion of the panel module case.

In a curved display device according to one embodiment of the present disclosure, the auxiliary display guide may be in contact with and is fastened with the backcover.

In a curved display device according to one embodiment of the present disclosure, the housing further may comprise: a cover-side supporting the panel module case and the auxiliary display guide, wherein an upper portion of the cover-side at least partially contacts the panel module case and the auxiliary display guide, and wherein a lower portion of the cover-side at least partially contacts the backcover and is fastened with the backcover.

In a curved display device according to one embodiment of the present disclosure, the auxiliary display panel may be adjacent to a bottom surface of the curved portion and is bent along the bottom surface of the curved portion, wherein the auxiliary display guide includes: an arc region contacting the bottom surface of the auxiliary display panel; and a flat region connected to one, facing the backcover, of opposite ends of the arc region and extending toward a center portion of the coverglass, wherein the auxiliary display module further comprises: an auxiliary display controller of which at least a portion is provided under the flat region, and wherein another portion of the auxiliary display controller extends along a bottom surface of the flat region toward a connection portion of the arc region and the flat region, is bent along the connection portion of the arc region and the flat region, and is connected to one, facing the backcover, of opposite edges of the auxiliary display panel.

In a curved display device according to one embodiment of the present disclosure, the housing further may comprise: a clip disposed in an overlapping region of the main display panel and the auxiliary display panel, wherein a top surface of the clip is adjacent to a bottom surface of the auxiliary display panel, and wherein a bottom surface of the clip is adjacent to a top surface of the main display panel.

In a curved display device according to one embodiment of the present disclosure, the curved display device further may comprise: a non-magnetic adhesive member between the auxiliary display guide and the auxiliary display panel, wherein the auxiliary display guide is formed of a metal, and wherein the auxiliary display guide and the auxiliary display panel are joined by the non-magnetic adhesive member.

In a curved display device according to one embodiment of the present disclosure, the curved display device may further comprise: a molding member covering at least a portion of the housing and at least a portion of the coverglass, wherein the molding member is provided on the longitudinal edges, and the molding member is connected to at least a portion of the curved portion and at least a portion of the housing.

In a curved display device according to one embodiment of the present disclosure, the housing may further comprise: a backcover disposed at a bottom surface of the curved display device, wherein the backcover is in contact with and fastened with the bracket, and wherein the molding member is further connected to at least a portion of the backcover.

In a curved display device according to one embodiment of the present disclosure, the housing may further comprise: a backcover disposed at a bottom surface of the curved display device, wherein the backcover is in contact with and fastened with the bracket, and wherein the molding member is further connected to at least a portion of the backcover.

In a curved display device according to one embodiment of the present disclosure, the main display module may further comprise: a panel module case supporting the main display panel and enclosing a lower portion of the main display panel, and wherein the panel module case is connected to the bracket.

In a curved display device according to one embodiment of the present disclosure, the auxiliary display module may further comprise: an auxiliary display guide supporting a bottom surface of the auxiliary display panel and supporting a bottom surface of at least a portion of the panel module case, wherein the housing further comprises: a cover-side supporting the panel module case and the auxiliary display guide, wherein an upper portion of the cover-side at least partially contacts the panel module case and the auxiliary display guide, wherein a lower portion of the cover-side at least partially contacts the backcover and is fastened with the backcover, and wherein the molding member is further connected to the cover-side.

In a curved display device according to one embodiment of the present disclosure, the curved display device may further comprise: a non-magnetic adhesive member between the auxiliary display guide and the auxiliary display panel, wherein the auxiliary display guide is formed of metal, wherein the auxiliary display guide and the auxiliary display panel are joined by the non-magnetic adhesive member, and wherein the molding member is joined to the backcover with an adhesive layer interposed therebetween.

In a curved display device according to one embodiment of the present disclosure, the auxiliary display panel may be an LED panel.

In a curved display device according to one embodiment of the present disclosure, the touch-sensing layer may comprise: a metal mesh as an electrode, and wherein a mesh size of a region corresponding to the curved portion, of the metal mesh is different from a mesh size of a region corresponding to the planar portion, of the metal mesh.

### Advantageous Effects of Invention

The curved display device according to an embodiment of the present disclosure may achieve a bezel-less structure with multiple display panels.

The curved display device according to the embodiment of the present disclosure may improve the support stability of the coverglass.

The curved display device according to an embodiment of the present disclosure may improve the heat dissipation efficiency of the auxiliary display panel provided on the curved portion.

The curved display device according to an embodiment of the present disclosure may reduce the manufacturing cost of the auxiliary display panel provided on the curved portion.

### BRIEF DESCRIPTION OF THE DRAWINGS

These and/or other features of embodiments of the invention will become apparent by describing in detail embodiments thereof with reference to the accompanying drawings, in which:
FIG. 1 is a top view to illustrate a curved display device according to one embodiment of the present disclosure.
FIG. 2 is a perspective view of a coverglass comprised in a curved display device, according to one embodiment of the present disclosure.
FIG. 3 is a perspective cross-sectional view of lines X1-X1' of FIG. 1 in a curved display device according to one embodiment of the present disclosure.
FIG. 4 is a perspective cross-sectional view of lines X1-X1' of FIG. 1 in a curved display device according to another embodiment of the present disclosure.
FIG. 5 is a perspective cross-sectional view of the X2-X2' lines of FIG. 1 in a curved display device according to one embodiment of the present disclosure.
FIG. 6 is a perspective cross-sectional view of the X2-X2' lines of FIG. 1 in a curved display device according to another embodiment of the present disclosure.
FIG. 7 is a perspective cross-sectional view of the X2-X2' lines of FIG. 1 in a curved display device according to another embodiment of the present disclosure.
FIG. 8 is a perspective cross-sectional view of the X2-X2' lines of FIG. 1 in a curved display device according to another embodiment of the present disclosure.
FIG. 9 is a perspective cross-sectional view of the X3-X3' lines of FIG. 8 in a curved display device according to another embodiment of the present disclosure.
FIG. 10 is a perspective cross-sectional view of the X4-X4' lines of FIG. 8 in a curved display device according to another embodiment of the present disclosure.
FIG. 11 is a perspective cross-sectional view of the X4-X4' lines of FIG. 8 in a curved display device according to another embodiment of the present disclosure.

### DESCRIPTION OF EMBODIMENTS

Below, detailed descriptions of related art techniques may be omitted to avoid obscuring the description. In addition, the description of the same configurations may be omitted.

The suffix "part" for a component used herein is added or used in consideration of the convenience of the specification, and it is not intended to have a meaning or role that is distinct from each other.

The terminology used herein is to describe an embodiment, and is not limiting. A singular expression includes plural expressions unless the context clearly indicates otherwise. The term "and/or" means one or all of the listed elements or a combination of any two or more of the listed elements.

As used herein, the term "has," "may have," "includes" or "may include" indicates existence of a corresponding feature (e.g., a numerical value, a function, an operation, or a constituent element such as a component), but does not exclude existence of an additional feature.

As used herein, the terms such as "1st" or "first," "2nd" or "second," etc., may modify corresponding components regardless of importance or order and are used to distinguish one component from another without limiting the components. For example, a first component may be referred to as a second component, and similarly, a second component may also be referred to as a first component.

If it is described that an element (e.g., first element) is "operatively or communicatively coupled with/to" or is "connected to" another element (e.g., second element), it may be understood that the element may be connected to the other element directly or through still another element (e.g., third element).

When it is mentioned that one element (e.g., first element) is "directly coupled" with or "directly connected to" another element (e.g., second element), it may be understood that there is no element (e.g., third element) present between the element and the other element.

The terms used herein may be interpreted in a meaning commonly known to those of ordinary skill in the art unless otherwise defined.

Hereinafter, certain embodiments will be described in detail with reference to the accompanying drawings.

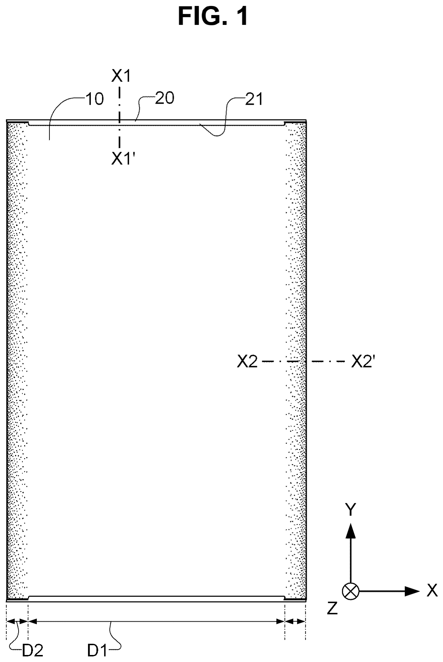

FIG. 1 is a perspective view to illustrate a curved display device, in accordance with one embodiment of the present disclosure.

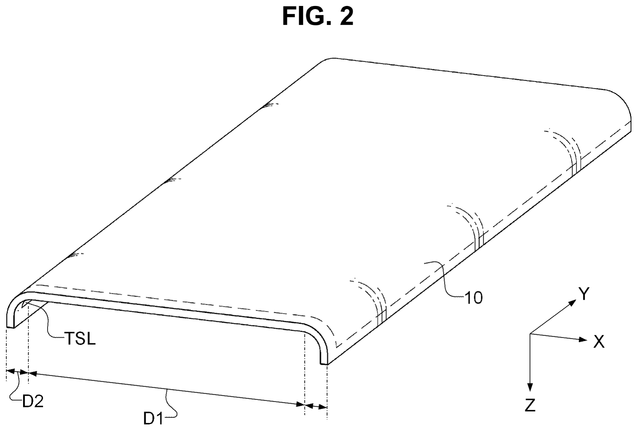

FIG. 2 is a perspective view of a coverglass comprised in a curved display device, according to one embodiment of the present disclosure.

Referring to FIGS. 1 and 2, a curved display device according to one embodiment of the present disclosure may comprise a coverglass 10; a housing 20; a primary display module (not shown); and an auxiliary display module (not shown). The coverglass 10 may comprise a planar portion D1 having an unbent, flat surface; and a curved portion D2 having a bent, curved surface.

The curved portion D2 may be a gently bent portion that extends from at least one edge of the coverglass 10 and that faces the direction in which the bottom surface is viewed (Z-direction). The curved portion D2 may be a gently curved portion that extends from each of a pair of opposing edges of the coverglass 10 and that faces the direction in which the bottom surface is viewed (Z-direction). The pair of opposing edges may be longitudinal edges. The remaining edges may be transverse edges. The curved portion D2 may be disposed on either lateral edge of the coverglass 10, when the coverglass 10 is upright position so that the thickness direction (Z-direction) of the coverglass 10 is almost perpendicular to the ground, so that the one of edges that are not curved portion D2 may be in contact with the ground. When the curved portion D2 is disposed on both lateral sides of the upright coverglass 10, the curved portion D2 provides convenience for the fingers and eyes of a user standing in front of the coverglass 10 to touch the curved portion D2, and thus the finger-reachable touch area may be widened. This may increase the user operability for the curved display device according to one embodiment of the present disclosure.

The coverglass 10 of the curved display device according to one embodiment of the present disclosure may have at least one edge that is a curved portion D2. Referring to FIGS. 1 and 2, two edges are illustrated as the curved portion D2, but are not limited thereto, and one edge may be the curved portion D2 as needed or desired. In the coverglass 10 of the curved display device according to one embodiment of the present disclosure, at least two edges may not be the curved portions D2.

In the curved display device according to one embodiment of the present disclosure, the coverglass 10 may be a single body formed glass. However, it is not limited thereto and may not be a single body as needed or desired. Further, other materials may be used as desired, or other materials may be used in combined with the glass. For example, the coverglass 10 may be formed a single body of acrylic. For example, the coverglass 10 may be formed by bonding glass part and acrylic part, wherein the planar portion D1 is formed of glass and the curved portion D2 is formed of acrylic.

In the curved display device according to one embodiment of the present disclosure, the coverglass 10 may comprise a touch-sensing layer TSL. The touch-sensing layer TSL may be provided on the bottom surface of the coverglass 10. The touch-sensing layer TSL may be connected with a touch-sensing device (not shown) housed in the housing 20 to detect a user's finger or the like placed on the coverglass 10. The touch sensing mechanism of the touch-sensing layer TSL may be based on the capacitive touch technology, but is not limited thereto, and may utilize other touch technologies, such as pressure sensitive or resistive touch technology.

In the curved display device according to an exemplary aspect of the present disclosure, the housing 20 may support the coverglass 10 and provide a receiving space for storing components necessary for operation of the curved display device. The housing 20 may be coupled to at least one portion of the components necessary for operation of the curved display device. Through such coupling, components necessary for the operation of the curved display device may be disposed/secured inside the housing 20. The housing 20 may comprise at least one bracket 21.

The bracket 21 may be disposed at each edge that is not the curved portion D2 of the coverglass 10. In one embodiment, the coverglass 10 may have a plurality of edges that are not the curved portions D2. In such a case, the bracket 21 may be provided in a plurality corresponding to the numbers of the edges that are not the curved portions D2. The bracket 21 may include a first plate, a second plate, and a third plate. The bracket 21 may have a shape in which the first plate and the second plate are spaced apart from each other and are provided so as to overlap at least with each other vertically. In the bracket 21, one of the edges of the first plate and one of the edges of the second plate are vertically aligned and may be connected to each other at the edges of the third plate facing each other. In other words, the bracket 21) may have a shape in which one edge of the first plate is aligned vertically with one edge of the second plate and connected to each other via the third plate. In this configuration, the third plate connecting the first plate and the second plate may be an inner wall plate.

Alternatively, the shape of the bracket 21 may be a single plate that is bent twice, and the two bending direction is the same, and thus two opposite ends of portions of the single plate face each other while spaced apart. Within an inner space of such the shape of the bracket 21, i.e., between the plates facing each other (a top plate and a bottom plate), may be disposed a portion of an edge that is not the curved portion D2 of the coverglass 10 and a portion of the housing 20. The plates facing each other may be the first plate and the second plate. Among the first plate and the second plate, the plate adjacent to the coverglass 10 may be a top plate, and the remaining plate may be a bottom plate. In one embodiment, the top plate may be connected to the coverglass 10. For example, the top plate may be in contact with the top surface of the coverglass 10. Alternatively, in some embodiments, the top plate may be indirectly connected to the top surface of the coverglass 10 via a cushioning member. Accordingly, when a user looks toward the top surface of the coverglass 10 of the curved display device according to an embodiment of the present disclosure, the bracket 21 may be observed. For example, at least a portion of the bracket 21 protruding beyond the top surface of the coverglass 10 from at least two edges of the coverglass 10 may be observed. At least a portion of the bracket 21 observed by the user may be a portion of the top plate.

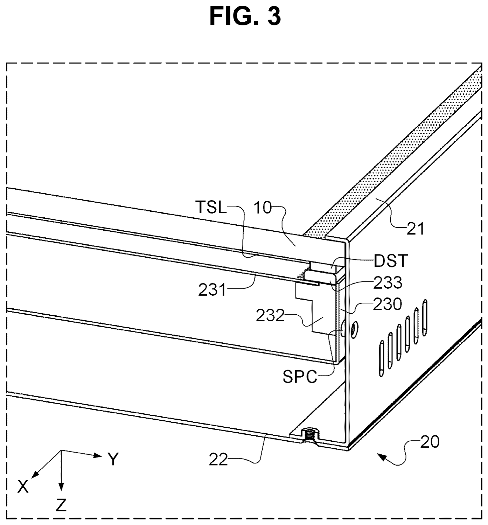

FIG. 3 is a perspective cross-sectional view taken along a lines X1-X1' of FIG. 1 of the curved display device in according to one embodiment of the present disclosure. The cross-sectional view shown in FIG. 3 illustrates an edge that is not the curved portion D2 of the curved display device.

Referring to FIG. 3, the curved display device according to one embodiment of the present disclosure may comprise a coverglass 10; and a housing 20. The housing 20 may comprise a bracket 21; a backcover 22; and a main display module.

The bracket 21 may be disposed at an edge that is not a curved portion D2, and a remaining plate of the two plates facing each other of the bracket 21, which is not adjacent to the coverglass 10, may be adjacent to the backcover 22 covering a bottom surface of the curved display device. In one embodiment, the backcover 22 may be combined with the bracket 21. By the combining between the backcover 22 and the bracket 21, a receiving space for various parts disposed under the coverglass 10 may be provided. Furthermore, such a combining may secure the installation position of the coverglass 10 that is at least partially in contact with the bracket 21. This combining/engagement may be embodied using fasteners (not shown). Such fasteners may be, for example, screws. For the application of such a screw, a through-hole corresponding to the screw may be provided in which the bracket 21 are in contact with the backcover 22, penetrating both the bracket 21 and the backcover 22. Screw threads for fastening screws corresponding to these through holes may be provided in the corresponding portions of the bracket 21 or the backcover 22. The combining/engagement of the bracket 21 and the backcover 22 via screws and threads may facilitate the disassembling of the housing 20 and the separation of the respective components during internal inspection for maintenance of the curved display device, and may facilitate reassembling after internal inspection. Although screw is given as an example, fastener is not limited thereto, and other fasteners/connecting measures may be applied as needed or desired. For example, measures such as welding, ultrasonic bonding, or members such as adhesives may be used for the combining/engagement.

Referring to FIG. 3, an end (in the Y-direction) of the edge of the coverglass 10 that is not the curved portion D2 is shown as contacting an inner side surface of the bracket 21, but is not limited thereto, and additional components may be provided between the end of the edge of the coverglass 10 and the inner side surface of the bracket 21 as needed or desired. For example, a cushion to absorb shock or vibration may be further provided between the end of the edge of the coverglass 10 and the inner side surface of the bracket 21. For example, bolts and nuts may be provided as fasteners instead of screws, and the threads inside the through-holes described above may be omitted for combination of bolts and nuts.

The bracket 21, according to one embodiment of the present disclosure, may comprise at least one through-hole in the portion connecting the two plates spaced apart and facing each other, the inner wall plate, to facilitate the entry and exit of air between the outside and the inside of the housing 20. Facilitating air entry and exit between the outside and the inside of the housing 20 may facilitate dissipation of heat generated by operation of the curved display device within the inside of the housing 20. This facilitated dissipation of heat may improve the operating life of the curved display device and reduce failure rates. In FIG. 3, such through-holes/ventilation-holes are shown as circular with an elongated Z-direction. However, this is not limited, and the shape and number of through-holes may be varied as needed or desired. Furthermore, these through-holes may be omitted as need or desired.

The main display module according to one embodiment of the present disclosure may comprise a main display panel 231; a panel module case 230; a panel-top securing member 233; a panel-bottom supporting member 232; and a double-sided tape DST. The main display panel 231 may be a rectangularly shaped plate having long and short edges. These long edges may be longitudinal edges and the short edges may be transverse edges. However, a shape of the main display panel 231 is not limited thereto, and the shape of the main display panel 231 may vary as desired. For example, the main display panel 231 may be shaped to resemble a square, with less variation between the lengths of each edge.

The main display panel 231 according to one embodiment of the present disclosure may be a display panel using LCD technology, for example. In the case of applying LCD technology to the main display panel 231 of the curved display device having a large screen, the cost required to output an image corresponding to the entire large screen may be reduced because the readiness level of LCD technology may be high and may be advantageous for the cost reduction. However, a display panel is not limited thereto, and other technologies may be used for the main display panel 231 as needed or desired.

If LCD technology may be utilized for the main display panel 231, a backlight unit (not shown) may be provided to light the main display panel 231 within the panel module case 230. The backlight unit may comprise a light source that emits light and components that direct the light to the main display panel 231 efficiently, such as a light guide plate or optical sheet.

The panel module case 230 may be provided under the main display panel 231 and may cover the bottom surface and side surface of the main display panel 231. The panel module case 230 may also provide receiving space for other components required for operation of the main display panel 231, and may be at least partially coupled to these other components. Such coupling/engaging allows the other components to be positioned/secured within the interior of the panel module case 230. The main display module may omit some of the components illustrated in FIG. 3 or may further comprise configurations not illustrated in FIG. 3.

For example, the main display module may further comprise an image processing circuit board comprising a processor for processing an image output to the main display panel 231. For example, the main display module may further comprise a device disposed behind the main display panel 231 and spaced apart from the main display panel 231 and providing light to the main display panel 231 in the case of applying LCD technology to the main display panel 231. The receiving space provided by the panel module case 230 may provide required space or separation distance for the placement of these light-providing devices.

The panel module case 230 may be coupled with the bracket 21. This coupling may be embodied via fasteners (not shown). Such fasteners may be, for example, screws. For the application of such a screw, a through-hole corresponding to the screw may be provided through both the panel module case 230 and the bracket 21 at a location contacting the panel module case 230 and the bracket 21. Screw threads for engagement of the screws may be provided on the inner wall plate or the panel module case 230. When the panel module case 230 and the bracket 21 are coupled via the screws and threads, the main display module and the main display panel 231 comprised in the panel module case 230 may be rigidly supported. However, supporting measures are not limited thereto, and other fasteners/attachment means may be applied as needed or desired. For example, means such as welding, ultrasonic bonding, or adhesives may be used. For example, bolts and nuts may be provided as fasteners instead of screws, and the threads inside the through-holes described above may be omitted.

Referring to FIG. 3, a spacer SPC is illustrated as provided between the coupled portion of the panel module case 230 and the bracket 21. When the spacer SPC is employed, the panel module case 230 and the bracket 21 may be securely coupled even when spaced apart. The availability of spacing apart may allow for increased design freedom of the panel module case 230. However, the arrangement of components such as the panel module case 230 and the bracket 21 is not limited to FIG. 3, and spacer SPC may be omitted as needed or desired. The material of the panel module case 230 may be metal. However, the material of the panel module case 230 is not limited thereto, and the panel module case 230 may be formed of any other material as desired. The materials that may be used are not limited as long as they are capable of withstanding the loads of components such as the main display panel 231 and the engagement means that provide for the components to be positioned/secured in the panel module case 230, such as threaded through holes and the like. For example, a reinforced plastic may be used for the panel module case 230.

The panel-top securing member 233 and the panel-bottom supporting member 232 may be provided in which they are inside the panel module case 230 and in which they are adjacent to one edge of the main display panel 231. At least a portion of the panel-top securing member 233 or the panel-bottom supporting member 232 may be disposed to extend outside the panel module case 230. At least another portion of the panel-bottom supporting member 232 may be in contact with an inner wall of the panel module case 230. However, the arrangement of components in the panel module case 230 is not limited thereto, and additional components may be provided between the panel-bottom supporting member 232 and the inner wall of the panel module case 230 as needed or desired. The panel-bottom supporting member 232 may be coupled to the inner wall of the panel module case 230. The measure of such coupling is not limited thereto. At least a portion of the panel-bottom supporting member 232 may be in contact with the bottom surface of the edge of the main display panel 231 to support the main display panel 231 from the bottom surface.

Referring to FIG. 3, a cross-section of the panel-bottom supporting member 232 with respect to a plane parallel to both the Z-direction and the Y-direction is illustrated as a rectangular region perpendicular to the thickness direction (Y-direction) of the main display panel 231, while another rectangular region parallel to the thickness direction (Z-direction) of the main display panel 231 connected substantially vertically is illustrated as having a ledge at one end of the rectangular region protruding in a horizontal direction (opposite to the Y-direction). Further, a portion of the upper surface of such a ledge is illustrated as contacting a bottom surface of one edge of the main display panel 231. However, the illustration is for explanation only, and the shape and the arrangement of the panel-bottom supporting member 232 is not limited thereto, and the shape and the arrangement of the panel-bottom supporting member 232 may be varied as needed or desired. The panel-bottom supporting member 232 may have various shapes as long as at least a portion of the panel-bottom supporting member 232 is capable of being coupled to the panel module case 230 and at least a portion of the panel-bottom supporting member 232 is capable of contacting the bottom surface of the main display panel 231 to support the main display panel 231. At least a portion of the panel-top securing member 233 may be in contact with the panel-bottom supporting member 232, and another portion of the panel-top securing member 233 may be in contact with the upper surface of the main display panel 231. When the panel-bottom supporting member 232 and the panel-top securing member 233 are coupled, a space corresponding to the thickness of the main display panel 231 may be provided. Through this space, a portion of an edge of the main display panel 231 may be inserted. The area of the main display panel 231 that is inserted may be at least a portion of remaining area excluding the area in which the image is displayed.

In FIG. 3, a cross-section of the panel-top securing member 233 about a plane parallel to both the Z-direction and the Y-direction is illustrated as having a shape resembling a trapezoid with rounded corners. However, this is an example for illustrative purposes only and the shape of the panel-top securing member 233 is not limited thereto, and the cross-sectional shape of the panel-top securing member 233 may be varied as desired. The panel-top securing member 233 may have various shapes as long as at least a portion of the panel-top securing member 233 are in contact with the upper surface of the main display panel 231 and another portion is capable of engaging the panel-bottom supporting member 232 to secure the main display panel 231. Above the panel-top securing member 233, the coverglass 10 may be disposed.

A double-sided tape DST may be provided between the top portion of the panel-top securing member 233 and the bottom surface of one edge of the coverglass 10. The coverglass 10 may have the touch-sensing layer TSL on the bottom surface of the coverglass 10, but the touch-sensing layer TSL may be disposed outside the area in contact with the double-sided tape DST. In other words, the double-sided tape DST may be in contact with the bottom surface of the coverglass 10 while avoiding the touch-sensing layer TSL of the coverglass 10. The double-sided tape DST may have a thickness and material that may be elastic, for example, to compensate for any tolerances that may exist between the coverglass 10 and the main display module and to help ensure a tight fit between the coverglass 10 and the main display module. Since the coverglass 10 is supported by the main display module via the double-sided tape DST, the support stability for the coverglass 10 may be improved.

The main display panel 231 may have an area in which an image is displayed; and other area in which an image is not displayed. The other area in which the main display panel 231 does not display an image may be located at one edge of the main display panel 231. The panel-top securing member 233 may be disposed away from the image output area of the main display panel 231, i.e., the panel-top securing member 233 may be disposed in the other area in which the main display panel 231 does not output an image. A width that is parallel to the Y-direction of the panel-top securing member 233 may correspond to a width in the Y-direction of the area in which the image is not displayed from the main display panel 231. In this correspondence, the arrangement of the panel-top securing member 233 may suppress the obscuring of the image output from the main display panel 231 by the arrangement of the panel-top securing member 233, and may be integrated so that the image is observed by a user over the widest possible area. However, the width parallel to the Y-direction of the panel-top securing member 233 is not limited thereto, and may vary as needed.

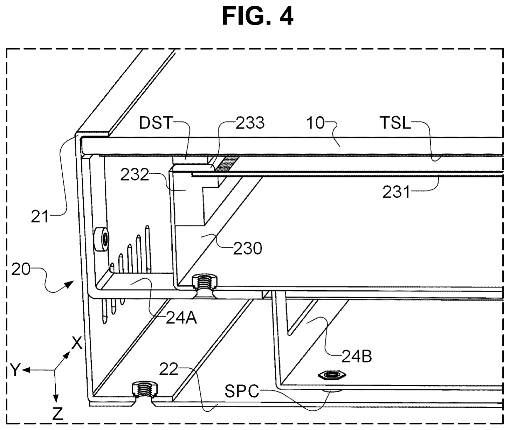

FIG. 4 is a perspective cross-sectional view along a line X1-X1' of FIG. 1 in a curved display device according to another embodiment of the present disclosure. For convenience, the embodiment of FIG. 4 will be described focusing mainly on the differences from the embodiment of FIG. 3, and where not described will be identical/similar to the embodiment described above.

Referring to FIG. 4, unlike the embodiments described above, the curved display device according to one embodiment of the present disclosure may further provide a module case support disposed between the main display module and the bracket 21 or the backcover 22. At least a portion of the module case support may be coupled in contact with the panel module case 230 of the main display module, and another portion of the module case support may be coupled in contact with the backcover 22 or the bracket 21. The module case support may comprise: a first module case support 24A; and a second module case support 24B. A portion of the first module case support 24A may be coupled in contact with the panel module case 230 of the main display module, and another portion may be coupled in contact with the bracket 21. A portion of the second module case support 24B may be coupled in contact with the panel module case 230, and another portion may be coupled in contact with the backcover 22.

In FIG. 4, the first module case support 24A that contacts the bracket 21 is a first bracket body disposed parallel to and adjacent to the inner wall plate portion of the bracket 21 and coupled to the inner wall plate of the bracket 21; and a second bracket body facing the panel module case 230 and coupled to the bottom surface of the panel module case 230. Furthermore, the first bracket body and the second bracket body are shown to be connected at an angle that is nearly perpendicular to each other. In the first module case support 24A, the edge of the first bracket body opposite the edge connected to the second bracket body may contact the bottom surface adjacent to one edge of the coverglass 10, which the edge is adjacent to the bracket 21. Through such contact, the first module case support 24A may more firmly support/fix the coverglass 10. The opposite edge end of the edges of the second bracket body of the first module case support 24A, which is connected to the first bracket body, may be in contact with the bottom surface of the panel module case 230.

In FIG. 4, each body of the first module case support 24A is illustrated as being coupled with the bracket 21 and the panel module case 230, respectively, via superimposed through-holes having threads in the inner wall plate and fasteners (not shown) coupled to these through-holes. As shown in FIG. 4, the support stability of the coverglass 10 and the main display module may be improved by the bodies of opposite ends of the first module case support 24A being coupled with the bracket 21 and the panel module case 230, respectively. By providing the first module case support 24A, design freedom regarding the placement of the main display module within the housing 20 may be enhanced. A spacer (SPC) may be provided between the inner wall plate of the bracket 21 and the panel module case 230, which may improve the freedom of placement of the main display module. Furthermore, when the first module case support 24A is provided, and the main display module is positioned through the module case support, only a spacer (SPC) is provided between the bracket 21 and the panel module case 230, so that the main display module may be stably positioned at a greater distance than in the combined case. Furthermore, a portion of the second module case support 24B of the module case supports may be coupled in contact with the panel module case 230 of the main display module, and another portion may be coupled in contact with the backcover 22.

In FIG. 4, the second module case support 24B disposed between the bottom surface of the main display module and the backcover 22 and in contact with the backcover 22 is illustrated as having one body facing the panel module case 230; and another body connected almost perpendicular to the one body and adjacent to the upper surface of the backcover 22. Furthermore, a spacer SPC is illustrated as being further provided between the bottom surface of the second module case support 24B and the backcover 22. The coupling between the second display module 24B and the other components, provided by the second module case support 24B, may improve the support stability for the main display module even when the distance between the bottom surface of the main display module and the backcover 22 is large. However, the shape and arrangement of the first module case support 24A and the second module case support 24B are not limited thereto, and may be changed as needed or desired.

The module case supports may have any shape as long as it provides separation distance between the main display module and the bracket 21 and/or between the main display module and the backcover 22, while it provides also engagement between the bracket 21 and the main display module and/or 's engagement between the main display module and the backcover 22. At least one of the first module case support 24A and the second module case support 24B may be omitted as needed or desired. The spacer SPC may be omitted as need or desired.

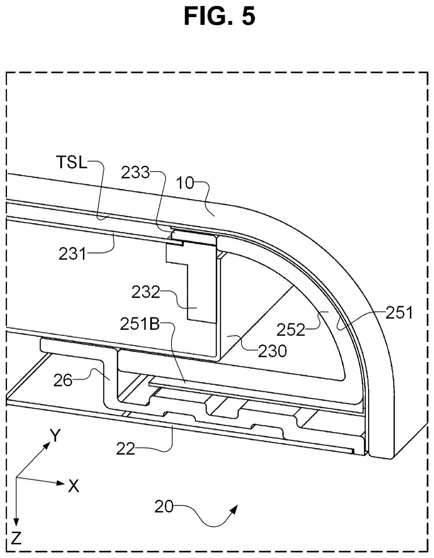

FIG. 5 is a perspective cross-sectional view of a curved display device in accordance with one embodiment of the present disclosure, along a line X2-X2' of FIG. 1. The cross-sectioned edge shown in FIG. 5 represents the edge that is the curved portion D2 of the curved display device.

Referring to FIG. 5, in a portion of the curved display device corresponding to the curved portion D2 of the coverglass 10 of the curved display device according to one embodiment of the present disclosure, the housing 20 may further comprise a auxiliary display module; and a cover-side 26.

The auxiliary display module may comprise a auxiliary display panel 251 for providing an image output to a curved portion D2 of the coverglass 10; a auxiliary display guide 252 having a shape corresponding to a bottom surface of the curved portion D2 and supporting the auxiliary display panel 251; an auxiliary display controller 251B disposed at least partially between the auxiliary display guide 252 and the cover-side 26. The cover-side 26 may be disposed between the auxiliary display module and the backcover 22 or between the main display module and the backcover 22.

The upper portion of the cover-side 26 may be coupled in contact with the primary display module and the auxiliary display module, respectively, and the lower portion of the cover-side 26 may be coupled in contact with the backcover 22. This coupling may improve support stability for the auxiliary display module provided under the curved portion D2 of the coverglass 10 and the main display module in contact with the auxiliary display module. This coupling may be realized by means of through-holes common to both parts in contact, threads disposed inside these through-holes, and fasteners inserted into these through-holes. Such fasteners may be, for example, screws. However, the measures for fastening are not limited thereto, and other fasteners or fastening means may be used for joining as required. For example, fastening means such as welding or adhesives may be used. For example, bolts and nuts may be provided as fasteners instead of screws, and the threads inside the through-holes described above may be omitted. The auxiliary display guide 252 may comprise an arc region comprising a curved surface corresponding to the curved portion D2; and a flat region comprising a flat surface that extends toward the center of the coverglass and that is connected to one end of opposite ends of the arc region, which the one end is facing the backcover 22.

The cross-section of the auxiliary display guide 252 respect to a plane parallel to both the Z-direction and the X-direction may be similar to a J-shape, for example. At least a portion of the auxiliary display controller 251B may be provided under the flat region of the auxiliary display guide 252. A portion of the flat region of the auxiliary display guide 252 may be in contact with a bottom surface of the panel module case 230. An edge of the flat region of the auxiliary display guide 252, which is opposite to the edge that are in contact with the arc region of the auxiliary display guide 252, may be in contact with the cover-side 26. The shape of such an arc may be an arc in which the angle formed between the opposite ends and the imaginary center of the arc is close to 90 degrees. The shape and degree of curvature of such an arc may correspond to the shape of the bottom surface of the curved portion D2 of the coverglass 10.

The auxiliary display panel 251 may be disposed on the upper surface of the arc region of the auxiliary display guide 252. That is, at least a portion of the auxiliary display panel 251 may be disposed between the bottom surface of the curved portion D2 of the coverglass 10 and the upper surface of the arc region of the auxiliary display guide 252. Accordingly, the auxiliary display panel 251 may be adjacent to the bottom surface of the curved portion D2 and may be curved along the bottom surface of the curved portion D2. A space may be formed between a bottom surface corresponding to an arc of the auxiliary display guide 252 and an upper surface corresponding to a flat region of the auxiliary display guide 252. In this space, other components not shown in FIG. 5 may be disposed.

For example, circuit boards associated with control of the auxiliary display panel 251 may be disposed in these spaces. However, the cross-sectional shape of the auxiliary display guide 252 is not limited thereto, and may be changed as need or desired. The auxiliary display guide 252 may have various shapes as long as it may be fastened in contact with the cover-side 26 and provides a space for storing/positioning the auxiliary display controller 251B, and supports the bottom surface of the auxiliary display panel 251, and be used for tight fit the coverglass 10 from the bottom surface of the edge of the curved portion D2.

The auxiliary display guide 252 may be formed of metal. Such metal may be, for example, aluminum, which has good thermal conductivity and strength. If the auxiliary display guide 252 has good strength, the structural stability of the curved display device supported by the auxiliary display guide 252 may be improved. Furthermore, if the auxiliary display guide 252 has good thermal conductivity, heat generated by other electronic components disposed adjacent to the auxiliary display guide 252 may be transferred to other structural components disposed in contact with the auxiliary display guide 252. This improved heat transfer capability may improve the lifespan of the electronic components comprised in the curved display device and reduce maintenance costs of the curved display device.

The cover-side 26 may be shaped to have two adjacent, nonoverlapping, substantially parallel plates with a height difference; and another plate connecting adjacent edges of these plates substantially vertically. Of these two plates, the region corresponding to the plate closer to the coverglass 10 may be a first cover-side plate, and the region corresponding to the remaining plate closer to the backcover 22 may be a second cover-side plate.

For example, the cross-sectional shape with respect to a plane simultaneously parallel to the X and Z directions of the cover-side 26 may be in the shape of a staircase having two treads and one riser connecting the two treads. In such a staircase shape, the area corresponding to the upper tread may correspond to the first cover-side plate, and the area corresponding to the lower tread may correspond to the second cover-side plate. In such a staircase configuration, the riser may correspond to the third cover-side plate.

The first cover-side plate may be supported in contact with a bottom surface of the panel module case 230. The second cover-side portion may be disposed with its upper surface facing the bottom surface of the auxiliary display guide 252. The bottom surface of both surfaces of the second cover-side plate may be disposed, and thus at least a portion of the bottom surface may be in contact with the upper surface of the backcover 22. The third cover-side plate may be in contact with one end of the flat region of the auxiliary display guide 252. Of the second cover-side plate portion of the cover-side 26, an edge adjacent to the coverglass 10 may have a protruding portion that is bent toward the Z-direction of the backcover 22.

An outer side surface (X-direction) of the protruding portion may be in contact with the coverglass 10 or a touch-sensing layer TSL on the bottom surface of the coverglass 10. Furthermore, the inner side surface (opposite to the X-direction) of such a protruding portion may be in contact with an edge of the backcover 22. In other words, the protruding portion of the cover-side 26 may protrude beyond the thickness (Z-direction) of the backcover 22, and may be exposed to the outside of the curved display device. To prevent the thickness (Z-direction) of the curved display device from becoming thicker due to the overlap of the exposed portion of the cover-side 26 and the backcover 22, the edge adjacent to the coverglass 10 of the backcover 22 may be spaced apart from the coverglass 10. A gap formed by this spacing may be filled by a portion of a protruding portion of the cover-side 26. By contacting the outer side surface of the protruding portion (z-direction) of the cover-side 26 with the bottom surface of the coverglass 10, the cover-side 26 may support the edge of the coverglass 10 and prevent the coverglass 10 from escaping/slipping. Such escaping/slipping may be caused by the self-weight of the coverglass 10 due to gravity.

The shape of the cover-side 26 is for illustrative purposes only. The cover-side 26 may have various shapes thereto, as long as the cover-side 26 may supported in contact with the bottom surface of the panel module case 230, and may be supported in horizontal contact with the auxiliary display guide 252 to support the auxiliary display guide 252, and may be in contact with the backcover 22 to support the backcover 22, and may be in contact with an edge of the curved portion D2 of the coverglass 10 to support the coverglass 10.

For example, the second cover-side plate may further have rough portions on the second cover-side plate to increase the surface area or to reduce the space between the second cover-side plate and the bottom surface of the auxiliary display guide 252. Such a rough portion may increase mechanical strength of the cover-side 26 by suppressing warpage of the second cover-side. The rough portions may be a surface having convex and concave portions. The rough portions may be a surface having corrugations. The rough portions may be a surface having prominences and depressions. For example, the region corresponding to the first cover-side plate may be omitted from the cover-side 26, and the upper portion of the region corresponding to the third cover-side plate or the upper portion corresponding to the riser may be in contact with the panel module case 230 to support the panel module case 230.

At least a portion of the auxiliary display controller 251B may be disposed in the space formed by the spacing between the upper surface of the second cover-side plate in the cover-side 26 and the bottom surface of the auxiliary display guide 252. Another portion of the auxiliary display controller 251B may extend along the bottom surface of the flat region toward a portion in which the flat region is connected to the arc region of the auxiliary display guide 252 along the bottom surface of the flat region. The extending portion of the auxiliary display controller 251B may be bent along the portion in which the arc region and the flat region of the auxiliary display guide 252 are connected. The auxiliary display controller 251B may be connected to one edge of the edges of the auxiliary display panel 251 that faces the backcover 22.

By connecting the auxiliary display panel 251 and the auxiliary display controller 251B, an image signal output to the auxiliary display panel 251 may be controlled/delivered. For the auxiliary display controller 251B, in addition, one edge adjacent to the auxiliary display panel 251 and the coverglass 10 is protruded from the plate of the auxiliary display controller 251B in a direction facing the planar portion D1 of the coverglass 10 (opposite to the Z direction), and the one edge of such protrusion may be connected to the auxiliary display panel 251. In other words, the protrusion of the auxiliary display controller 251B may prevent the auxiliary display panel 251 from escaping/slipping by supporting one edge of the auxiliary display panel 251 facing one edge of the curved portion D2 in the X direction. The auxiliary display controller 251B may be in contact with the bottom surface of the flat region of the auxiliary display guide 252 as needed or desired. However, the shape and arrangement of the auxiliary display controller 251B is not limited thereto and may be changed as needed or desired.

At least a portion of the auxiliary display controller 251B below the flat region of the auxiliary display guide 252, various components required for operation of the auxiliary display controller 251B at least one surface of the auxiliary display controller 251B may be disposed on the with the auxiliary display controller 251B. These various components may be such as a display driver integrated circuit (DDIC) in the form of a chip; or circuit lines. These various components may be disposed on a flexible substrate that may flex along the space in which it is installed. The flexible substrate of the auxiliary display controller 251B may comprise a flexible substrate; and various components disposed on the flexible substrate. The flexible substrate may be a flexible printed circuit board (FPCB).

In FIG. 5, the region provided under the flat region of the auxiliary display controller 251B is illustrated as having the shape of flat, nearly rectangular plate, but FIG. 5 is for convenience of illustration only and omit other elements that may be disposed on one surface of the plate, whereas, the surface and cross-sectional shape of the auxiliary display controller 251B according to one embodiment of the present disclosure may vary as needed or desired and may comprise other components not shown.

The distance between the display guide 252 and the bottom surface of the coverglass 10, i.e., the space required for disposing the auxiliary display panel 251, may be reduced by bending the auxiliary display controller 251B along the portion in which the arc region and the flat region of the auxiliary display guide 252 meet, by disposing at least a portion of the display controller 251B below the flat region, and by disposing the various parts described above in the area disposed in the below the flat region. This reduction in space may be achieved by clustering the components required for operation of the auxiliary display panel 251 in a region of the auxiliary display controller 251B spaced from the coverglass 10 but adjacent to the flat region.

The auxiliary display panel 251 may be disposed tightly against the bottom surface of the curved portion D2 of the coverglass 10. This close fit may be achieved by the upper surface of an arc region of the auxiliary display guide 252 disposed on the bottom surface of the auxiliary display panel 251 pushing up and supporting the bottom surface of the auxiliary display panel 251 from below (opposite to Z-direction) toward the bottom surface of the coverglass 10.

The area in which the auxiliary display panel 251 is disposed on the bottom surface of the coverglass 10 may overlap with at least a portion of the curved portion D2 and a portion of the planar portion D1. In the main display module that is provided under the planar portion D1 of the coverglass 10, the near-edge area of the main display panel 231 may be an area in which image is not displayed. Such an area may be a bezel or a black mask area of the main display panel 231.

An area of the auxiliary display panel 251, which is disposed to overlap at least a portion of the planar portion D1 beyond the curved portion D2 of the coverglass 10, may cover at least a portion of the areas of the main display panel 231 in which image is not displayed. From the perspective of a user looking at the coverglass 10 from the top surface (front surface if the curved display device is stood on the ground with an edge other than the edge of the curved portion D2 facing the ground) of the coverglass 10, the area of the main display panel 231 in which the image is not displayed may not be visible to the user because the area is covered by the overlapping edge of the auxiliary display panel 251 that extends beyond the curved portion D2. The main display panel 231 and the auxiliary display panel 251 may be provided such that at least a portion of each of the main display panel 231 and the auxiliary display panel 251 overlap. In the area in which the main display panel 231 and the auxiliary display panel 251 overlap, the auxiliary display panel 251 may be disposed above the main display panel 231. In the area in which the main display panel 231 and the auxiliary display panel 251 overlap, a portion of the auxiliary display panel 251 may be disposed closer to the bottom surface of the coverglass 10 than a portion of the main display panel 231.

As a result of this arrangement of the main display panel 231 and the auxiliary display panel 251, the image displayed via the coverglass 10 may be perceived by a user as an image displayed from an area spanning both the curved portion D2 and the planar portion D1, similar to an image displayed from curved display panel with continuous surface without bezels. An edge of the auxiliary display panel 251, which extends beyond the curved portion D2 to cover at least a portion of the planar portion D1, may have the panel-top securing member 233 provided under the edge of the auxiliary display panel 251. The panel-top securing member 233 may be provided under the auxiliary display panel 251. A non-magnetic adhesive member (not shown) may be further disposed between the upper surface of the panel-top securing member 233 and the bottom surface of the auxiliary display panel 251. The non-magnetic adhesive member (not shown) may be further disposed between the upper surface of the portion corresponding to the arc region of the auxiliary display guide 252 and the bottom surface of the auxiliary display panel 251.

The auxiliary display panel 251 may be coupled to the auxiliary display guide 252 with the non-magnetic adhesive member. The non-magnetic adhesive member may achieve adhesion with measure other than magnetic force. Such measure other than magnetic forces may be, for example, chemical bonding. The non-magnetic adhesive member may be a double-sided adhesive tape. This double-sided adhesive tape may be different from the double-sided tape DST (illustrated in FIGS. 3 and 4) that is disposed between the coverglass 10 and the panel-top securing member 233 at an edge rather than the curved portion D2. The non-magnetic adhesive member disposed on the bottom surface of the auxiliary display panel 251 may be thin to provide a tight fit while reducing thickness. However, the physical/material property of non-magnetic adhesive member is not limited thereto, and the non-magnetic adhesive member disposed on the bottom surface of the auxiliary display panel 251 may have a thickness and elasticity, such as a double-sided tape DST disposed between the coverglass 10 and the panel-top securing member 233 on an edge that is not the curved portion D2, as needed or desired.

The non-magnetic adhesive member disposed on the bottom surface of the auxiliary display panel 251 may be thermally conductive. In the case of that the non-magnetic adhesive member is thermally conductive, the non-magnetic adhesive member disposed on the bottom surface of the auxiliary display panel 251 may transfer heat, which is generated during operation of the auxiliary display panel 251, to the auxiliary display guide 252 that is in contact via the non-magnetic adhesive member. The heat transferred to the auxiliary display guide 252 may be transferred to the cover-side 26 that is adjacent to the auxiliary display guide 252. The heat transferred to the cover-side 26 may be transferred to the backcover 22 in contact with the cover-side 26.

By transferring the heat generated during operation of the auxiliary display panel 251 to the backcover 22 in contact with the exterior of the curved display device, the heat generated by the auxiliary display panel 251 may be effectively dissipated. By effectively dissipating the heat generated during operation of the auxiliary display panel 251, the lifetime of the auxiliary display panel 251 and the curved display device may be extended and maintenance costs of the curved display device may be reduced.

The auxiliary display panel 251 may be a panel based on a display technology that may be easily disposed on a curved surface and may be implemented at a thinner thickness than conventional LCD technology. The auxiliary display panel 251 may be, for example, a curved display panel fabricated with a predetermined curvature. The auxiliary display panel 251 may be, for example, a flexible display panel that may be bent in response to the curvature of the installation location. The display technology used in the auxiliary display panel may be, for example, LED technology. Such LED technology may be an organic light emitting diode (oLED) technology or an inorganic light emitting diode (iLED) technology. When such oLED technology or iLED technology is applied to the auxiliary display panel 251, the thickness of the panel disposed on the curved portion D2 may be reduced. In the curved display device according to an embodiment of the present disclosure, the auxiliary display panel 251 may be provided as overlapped above the edge of the main display panel 231, to cover the area of the main display panel 231 in which the image is not displayed.

Due to the overlapped auxiliary display panel 251, a separation distance may occur between the upper surface of the main display panel 231 and the bottom surface of the planar portion D1 of the coverglass 10. The larger this separation distance is, the greater the discontinuity in the overall image perceived by the user via the coverglass 10. This separation distance may cause optical distortion in the image observed via the coverglass 10. Furthermore, as the separation distance increases, the user may have difficulty perceiving the image of the planar portion D1 and the curved portion D2 as a unified image. By reducing the thickness of the auxiliary display panel 251 disposed in the curved portion D2 and employing oLED or iLED technology, the separation distance between the main display panel 231 and the coverglass 10 may be reduced. By reducing the separation distance between the upper surface of the main display panel 231 and the bottom surface of the coverglass 10, the discontinuity of the image perceived through the coverglass 10 may be reduced. However, the technology that may be applied to the auxiliary display panel 251 is not limited to the LED technology, and any technology that may provide a panel that may be disposed on a curved surface, and that is implemented at a thinner thickness than conventional LCD technology, may be applied to the auxiliary display panel 251.

A touch-sensing layer TSL may be disposed between the bottom surface of the curved portion D2 of the coverglass 10 and the auxiliary display panel 251. The touch-sensing layer TSL disposed on the bottom surface of the curved portion D2 and the bottom surface of the planar portion D1 may be unibody. By having the touch-sensing layer TSL disposed on the bottom surface of both the planar portion D1 and the curved portion D2, the coverglass 10 may provide interactive operation via user touch across the curved portion D2 and the planar portion D1. However, the arrangement of the touch-sensing layer TSL is not limited thereto, and the arrangement of the touch-sensing layer TSL may vary as needed or desired. For example, the touch-sensing layer TSL disposed on the bottom surface of the planar portion D1 and the touch-sensing layer TSL disposed on the bottom surface of the curved portion D2 may be separate layers.

Contacting portions of between the auxiliary display guide 252 and the auxiliary display controller 251B; between the auxiliary display guide 252 and the cover-side 26; and/or between the auxiliary display guide 252 and the auxiliary display controller 251B may each be coupled to each other. By such coupling, structural stability between the above-described parts may be improved. Such coupling may be implemented via fasteners (not shown). Such fasteners may be, for example, screws. To apply such the screw to the auxiliary display guide 252 and others, a through-hole corresponding to the screw may be provided in which the contacting portions are in contact with each other. Screw threads for fastening screws corresponding to these through holes may be provided in the corresponding portions of the bracket 21 or the backcover 22. Coupling of the contacting portions abovementioned via the screws and threads may facilitate opening of the housing 20 and separating the respective parts, which is required during an internal inspection for maintenance of the curved display device, and may facilitate the reassembly carried out after the internal inspection. However, the measures of coupling the contacting parts are not limited thereto, and other fasteners/coupling measures may be applied as needed or desired. For example, measures such as welding, ultrasonic bonding, or the like may be used. For example, coupling members such as adhesives or the like may be used. For example, bolts and nuts may be provided as fasteners instead of screws, and the threads within the through-holes described above may be omitted.

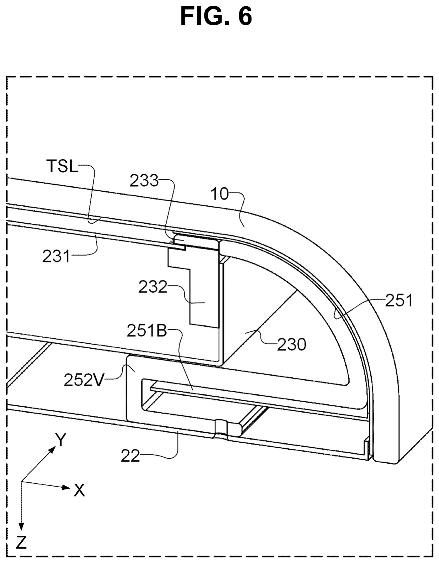

FIG. 6 is a perspective cross-sectional view of the X2-X2' line of FIG. 1 in a curved display device according to another embodiment of the present disclosure. For convenience, the embodiment of FIG. 6 will be described focusing mainly on the differences from the embodiment of FIG. 5, and where not described will be identical/similar to the embodiment described above.

Referring to FIG. 6, the curved display device according to one embodiment of the present disclosure may be provided with a auxiliary display guide 252V provided under the auxiliary display panel 251, unlike the embodiments aforementioned. For example, a cross-sectional shape of the auxiliary display guide 252V with respect to a plane parallel to both the 'Z-direction and the X-direction corresponds to an edge of the flat region of the auxiliary display guide 252, which is opposite to an edge contacting to the arc region, may be further almost perpendicularly connected to an upper end of an upward vertically bent edge of another plate, while opposite edge of the another plate faces toward the arc region (X-direction). In such the auxiliary display guide 252V, a region corresponding to a flat region of the auxiliary display guide 252 of another embodiment may be a first flat region; and a region of the another plates connected to the first flat regionthat faces the first flat region may be a second flat region.

At least a portion of a bottom surface of the second flat region may be in contact with the upper surface of the backcover 22. The previously described shape of the auxiliary display guide 252V may be formed as a single body. The shape of the second display guide 252V may be similar to a shape in which the second display guide 252 illustrated in FIG. 5 may be further connected to the cover-side 26 in which the portion corresponding to the first cover-side plate portion is omitted. By providing the auxiliary display guide 252V in the shape aforementioned, the structural function that was performed by the auxiliary display guide 252 in combination with the cover-side 26 in FIG. 5 may be performed by the auxiliary display guide 252V alone.

This shape of the auxiliary display guide 252V may be provided as one body. By the auxiliary display guide 252V being provided as one body having the shape aforementioned, the number of parts and assembly process steps required to configure the curved portion D2 of the curved display device may be reduced. This may result in increased productivity for manufacturing the curved display device. Furthermore, by providing the auxiliary display guide 252V as one body, the performance of transferring heat generated during operation of the auxiliary display panel 251 and other electronic components to the backcover 22 may be improved.

In the cross-sectional shape of the auxiliary display guide 252V, the area of the second flat region may be smaller than the area of the region corresponding to the second cover-side plate in the other embodiment of Fig. 5 in which the auxiliary display guide 252 and the cover-side 26 are used together as separate parts. The cross-sectional length of the portion corresponding to the second flat region of the auxiliary display guide 252V may be shorter than the cross-sectional length of the flat region of the auxiliary display guide 252. In such a case, the portion protruding in the downward direction (Z direction) of the edge adjacent to the coverglass 10 that is provided in the region corresponding to the second cover-side plate portion of another embodiment in which the auxiliary display guide 252 and the cover-side 26 are used together as separate parts may not be provided in the auxiliary display guide 252V. In FIG. 5, in which the auxiliary display guide 252 is applied, the protruding portion of the edge adjacent to the coverglass 10 of the auxiliary display guide 252 plays a role in supporting the edge of the coverglass 10 and preventing the escaping/slipping of the coverglass 10. In one embodiment with the auxiliary display guide 252V, this role of preventing escaping/slipping may be accomplished by the backcover 22 having a modified edge that is adjacent to the coverglass 10.

In embodiments with the auxiliary display guide 252V, the width (parallel to the X-direction) of the portion of the auxiliary display guide 252 corresponding to the second flat region of the auxiliary display guide 252V is small, such that an edge of the second flat region may not contact the coverglass 10. In such cases, the backcover 22 may extend further toward the edge of the curved portion D2 of the coverglass 10 than the width in the other embodiment in which the auxiliary display guide 252 and the cover-side 26 are used together as separate parts.

An elongated portion of the edge of the backcover 22 may be bent and protruding toward the planar portion D1 of the coverglass 10 (in the opposite direction of the Z-direction) while in contact with the bottom surface of the coverglass 10. The outer side surface (in the X-direction) of such the protruding elongated portion are in contact with the bottom surface of the coverglass 10, and may support the coverglass 10 to improve the structural stability of the coverglass 10 and prevent the coverglass 10 from being escaping/slipping. By providing to bend the protruding elongated portion of the backcover 22 toward the planar portion D1(opposite to Z-direction), in which is the backcover 22 is used together with the auxiliary display guide 252V, an increase in the thickness of the curved display device (in a direction parallel to Z) may be suppressed.

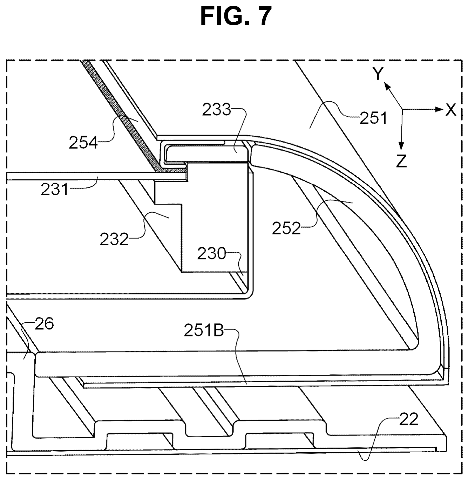

FIG. 7 is a perspective cross-sectional view of the X2-X2' line of FIG. 1 in a curved display device according to another embodiment of the present disclosure. For convenience, the embodiment of FIG. 7 will be described focusing mainly on the differences from the embodiments of FIG. 5 to FIG. 6, and where not described will be identical/similar to the embodiment described above.

Referring to FIG 7, the curved display device according to one embodiment of the present disclosure may be further provided with a clip 254 disposed in a region in which the main display panel 231 and the auxiliary display panel 251 overlap. The clip 254 may have a shape such that two plates are at least partially overlapped with a height difference, wherein one edge of the top plates and another edge of the bottom plate are aligned to be in contact with almost perpendicularly in an other plate, such that the two aligned edges are connected via the other plate. Alternatively, the shape of the clip 254 may be a single plate that is bent twice, and the two bending direction is the same, so that two opposite end portions of the single plate face each other while spaced apart.

In FIG. 7, each edge in which two plates are connected in a cross-section of the clip 254 is illustrated as having a near vertical edge, however is not limited thereto, and the cross-sectional shape of the clip 254 may vary as needed or desired. For example, the portion of the clip 254 connecting the two plates may be gently curved instead of having an angle. The portion of the clip 254 corresponding to the upper plate may be located between the bottom surface of the auxiliary display panel 251 and the upper surface of the panel-top securing member 233. The portion of the clip 254 corresponding to the lower plate may be disposed between the bottom surface of the panel-top securing member 233 and the upper surface of the main display panel 231. The area in which the clip 254 and the main display panel 231 overlap may be an area in which image is not displayed in the main display panel 231. In the area in which the main display panel 231 and the auxiliary display panel 251 overlap, the structural stability of the curved display device may be improved by having the clip 254 support the spaced portion between the bottom surface of the auxiliary display panel 251 and the upper surface of the main display panel 231.

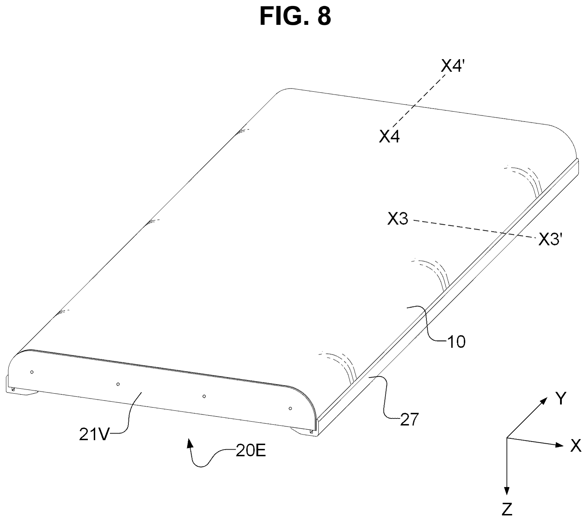

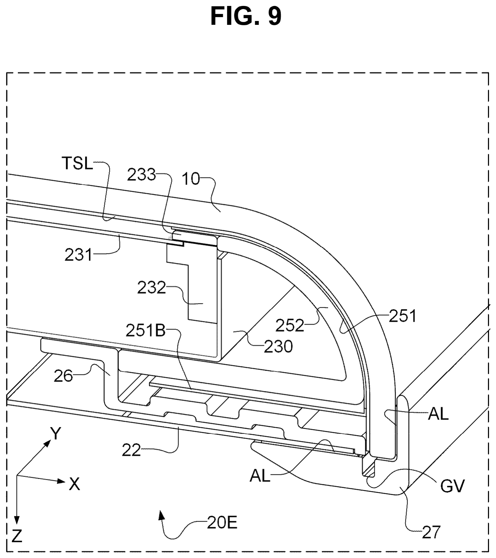

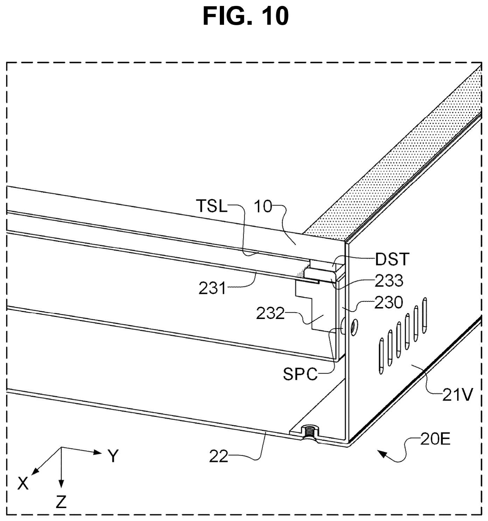

FIG. 8 is a perspective view showing a curved display device according to an embodiment of the present disclosure. FIG. 9 shows a part of the curved display device according to an embodiment of the present disclosure, and is a perspective cross-sectional view of the X3-X3' line in FIG. 8. FIG. 10 is a perspective cross-sectional view of a portion of the curved display device according to an embodiment of the present disclosure, corresponding to the X4-X4' line in FIG. 8. In the embodiment, for the purpose of convenience in explanation, the differences from the aforementioned embodiments are described primarily, and the parts not described follow the aforementioned embodiments.

With reference to FIGs 8, 9, and 10, the curved display device according to an embodiment of the present disclosure may comprise the coverglass 10; the housing 20E; the main display module; the auxiliary display module; and a molding member 27. The housing 20E may comprise a bracket 21V and a backcover 22. The coverglass 10 may have a plurality of edges. The plurality of edges may include transverse edges opposite each other and longitudinal edges opposite each other. The coverglass 10 may have a planar portion D1 and a curved portion D2. The longitudinal edges may correspond to the curved portion D2. The bracket 21V may be disposed on the edges corresponding to the planar portion D1 of the coverglass 10. Thus, the bracket 21V may be disposed on the transverse edges. The bracket 21V may be disposed on the remaining edge portions of the coverglass 10 that are not curved portions D2. The bracket 21V may cover at least a portion of the side portions of the coverglass 10 corresponding to the transverse edges. The bracket 21V may be provided in a plurality so as to be provided corresponding to each of the transverse edges.

The bracket 21V may cover the side portions corresponding to the planar portion D1 of the coverglass 10. In some embodiments, covering area of the bracket 21V is provided smaller than the side portion corresponding to the planar portion D1 of the coverglass 10, and thus a part of the side portion of the coverglass 10 may be exposed. However, this is not limited to this, and in some embodiments, the covering area of the bracket 21V is provided larger than the side portion corresponding to the planar portion D1, and thus the side portion of the coverglass 10 may be completely covered.

The bracket 21V may have a shape in which one plate is bent once. This bent shape may have two plates connected to each other. Of the two plates, the plate adjacent to the backcover 22 may be a bottom plate, and the remaining plate may be an inner wall plate. In the X-Z plane, the angle between the two plates may be about 90 degrees. The cross-sectional shape of the bracket 21V with respect to the X-Z plane may be L-shaped. However, the embodiments of the present disclosure are not limited to this. In some embodiments, the angle between the two plates may vary.

In the embodiments shown in FIGs 1, 3, and 4, the bracket 21 may protrude above the top surface of the coverglass 10 and may have the top plate formed by bending once more along the center direction of the coverglass 10. The top plate faces the top surface of the coverglass 10. In contrast, in one embodiment, the bracket 21V is formed by bending a single plate once, then the bracket 21V may not have a top plate. Accordingly, in the embodiment of FIG. 8, when a user stands in front of a curved display device installed on the ground and looks at the top surface of the coverglass 10, the image shown through the coverglass 10 may not be obscured by the bracket 21V. In other words, a curved display device employing the bracket 21V may further increase the screen area provided to the user.

The molding member 27 may be provided on the side portion corresponding to the curved portion D2 of the coverglass 10. The molding member 27 may be provided in a plurality as to be disposed corresponding to the longitudinal edges of the coverglass 10. The molding member 27 may cover at least a portion of the side portion corresponding to the curved portion D2 and at least a portion of the housing 20E. The molding member 27 may extend along the curved portion D2 of the coverglass 10. The molding member 27 may be a plate shape having long edges and short edges, and may be bent along an imaginary bending line formed in the middle parallel to the long edges. The molding member 27 may be bent along the edge at which the coverglass 10 and the backcover 22 meet. The molding member 27 may be shaped to enclose at least a portion of the coverglass 10 and at least a portion of the housing 20E together. The molding member 27 may have an inner surface facing the coverglass 10 and the backcover 22 and an outer surface facing the inner surface. The inner surface may have a first inner surface adjacent to the coverglass 10 and a second inner surface adjacent to the backcover 22.

The first inner surface of the molding member 27 can be connected to at least portion of the coverglass 10. The second inner surface of the molding member may be connected to at least a portion of the backcover 22. In some embodiments, the second inner surface of the molding member 27 may be connected to at least a portion of the backcover 22 and at least a portion of the cover-side 26.

In one embodiment, an adhesive layer AL may be further disposed between the first inner surface of the molding member 27 and the coverglass 10. The adhesive layer AL may be further disposed between the second inner surface of the molding member 27 and the backcover 22. The adhesive layer AL may be provided in a plurality and may be provided on the first inner surface and the second inner surface, respectively. The adhesive layer AL provided on the first inner surface may be in contact with the coverglass 10. The adhesive layer AL provided on the second inner surface may be in contact with the backcover 22. In some embodiments, at least a portion of the cover-side 26 may be in contact with the adhesive layer AL. The adhesive layer AL may be a tape having adhesive properties on both surfaces. The adhesive layer AL may be the same as the double-sided tape DST. Alternatively, the adhesive layer AL may be provided differently from the double-sided tape DST.

The coverglass 10 can be joined to the backcover 22 through the molding member 27. In other words, the support mechanism for securing/fixing the coverglass 10 may be added. As a result, the coverglass 10 may be prevented from detaching. As a result, the structural stability of the curved display device may be further improved.

The molding member 27 may have a groove GV on the second inner surface. The groove GV may be formed by being recessed from the surface of the second inner surface toward the outer surface. The groove GV may be formed extending in the lengthwise direction of the molding member 27 along the longitudinal edges of the coverglass 10. The adhesive layer AL disposed on the second inner surface may be disposed on the second inner surface avoiding the area in which the groove GV is formed. The groove GV may have a long width and a short width. The short width of the groove GV may be larger than the thickness of the touch-sensing layer TSL. The groove GV may be disposed on the second inner surface, but at least a portion of the groove GV may be disposed so as to overlap almost perpendicularly with one edge of the touch-sensing layer TSL corresponding to the curved portion D2.

During the assembly process or maintenance process of the curved display device, the touch-sensing layer TSL may be temporarily moved to protrude beyond the backcover 22 (in the Z direction). The groove GV may provide space for at least a part of the touch-sensing layer TSL exposed beyond the backcover 22 to be temporarily positioned. By providing such a space, damage to the touch-sensing layer TSL caused by the second inner surface of the molding member 27 can be prevented. As a result, the effort required to remove the molding member 27 from the housing 20E during the assembly or maintenance process of the curved display device can be reduced. In addition, by providing such space, external exposure of the touch-sensing layer TSL can be prevented during the assembly process or maintenance process of the curved display device.

In one embodiment, the molding member 27 may be an injection molding material. For example, the injection molding material may be injection molded from at least one material selected from silicone, polycarbonate, and metal. However, the embodiments of the present disclosure are not limited thereto. In some embodiments, the molding member 27 may be formed by other methods or other materials.

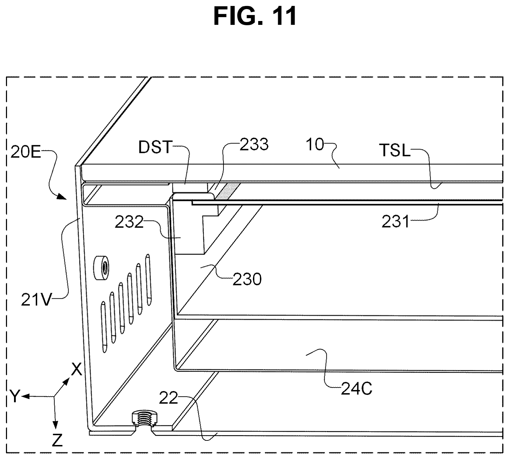

FIG. 11 shows a portion of a curved display device according to an embodiment of the present disclosure, and is a cross-sectional view taken along the X4-X4' line in FIG. 8. In the embodiment, for convenience of explanation, the differences from the above-described embodiments are described, and the parts not described follow the above-described embodiments.

Referring to FIG. 11, In the curved display device according to an embodiment of the present disclosure, the housing 20E may comprise the module case support further comprising a third module case support 24C. The third module case support 24C may comprise at least five plates, and the at least five plates may be connected to each other to form the third module case support 24C. Specifically, the at least five plates may comprise a first plate disposed facing the backcover 22; a second plate bent and connected to the first plate; a third plate bent and connected to the second plate; a fourth plate bent and connected to the third plate; and a fifth plate bent and connected to the fourth plate.

The first plate may be disposed facing the backcover 22, but may be disposed between the bottom surface of the panel module case 230 and the backcover 22. Although not shown, the first plate may be connected to other components such as the backcover 22. The first plate may have one edge connected to the second plate.

The second plate may have an opposite edge facing one edge connected to the first plate. The second plate may be connected to the third plate through the opposite edge. The second plate may be connected in a direction intersecting the first plate, but may intersect parallel to one side surface of the panel module case 230. In one embodiment, the second plate may be in contact with one side surface of the panel module case 230 to support the panel module case 230. The angle between the second plate and the first plate may be almost 90 degrees, but is not limited thereto. In some embodiments, the angle between the second plate and the first plate may vary.

The third plate may have an opposite edge facing one edge connected to the second plate. The third plate may be connected to the fourth plate through the opposite edge. The third plate is connected in a direction intersecting with the second plate, but it may intersect with the inner wall plate of the bracket 21V while intersecting with the part corresponding to the planar portion D1 of the coverglass 10 so as to be parallel to the planar portion D1 of the coverglass 10. In one embodiment, the third plate may intersect with the second plate so as to be almost perpendicular to the inner wall plate of the bracket 21V and parallel to the first plate. The third plate and the first plate may not have a vertically overlapping area. In other words, the direction in which the second plate is bent while connected to the first plate may be parallel to but opposite to the direction in which the third plate is bent while connected to the first plate. The angle between the third plate and the second plate may be almost 90 degrees, but is not limited thereto. In some embodiments, the angle between the third plate and the second plate may vary.

The fourth plate may have an opposite edge facing one edge connected to the third plate. The fourth plate may be connected to the fifth plate through the opposite edge. The fourth plate may be connected in a direction intersecting with the third plate, but may intersect with the third plate parallel to the inner wall plate of the bracket 21V. The fourth plate and the second plate may not have a vertically overlapping area. In other words, the direction in which the third plate is connected to the second plate and is bent may be parallel to but opposite to the direction in which the fourth plate is connected to and is bent. In one embodiment, the fourth plate may be connected to the inner wall plate of the bracket 21V. The angle between the fourth plate and the third plate may be almost 90 degrees, but is not limited thereto. In some embodiments, the angle between the fourth plate and the third plate may vary.

The fifth plate may have an opposite edge facing one edge connected to the fourth plate. The end of the fifth plate including the opposite edge may face the center of the coverglass 10. The fifth plate may be connected in a direction intersecting with the fourth plate, but may intersect with the fourth plate parallel to the portion corresponding to the planar portion D1 of the coverglass 10. The fifth plate and the third plate may have an area that overlaps vertically. That is, the direction in which the fourth plate is bent when connected to the third plate may be the same as the direction in which the fifth plate is bent when connected to the third plate. The fifth plate may be connected to the bottom surface of the coverglass 10. In one embodiment, the fifth plate may support the coverglass 10 by abutting against the bottom surface of the coverglass 10. The angle between the fifth plate and the fourth plate may be almost 90 degrees, but is not limited thereto. In some embodiments, the angle between the fifth plate and the fourth plate may vary.

Since the first plate, second plate, third plate, fourth plate, and fifth plate are connected, the stress applied to any one of the first plate, the second plate, the third plate, the fourth plate, and the fifth plate can be distributed to each other. For example, since the fourth plate of the panel module case 230 are in contact with the inner wall plate of the bracket 21V, and the two plates are in contact with one side surface of the panel module case 230, which means that when the curved display device is installed in an upright position, the weight of the parts provided in the interior space of the panel module case 230 can be distributed to the bracket 21V via the third module case support 24C. For example, when the fifth plate is connected to the bottom surface of the coverglass 10 and the first plate is connected to the backcover 22, a portion of the weight of the coverglass 10 may be distributed to the backcover 22 via the third module case support 24C. As a result, the structural stability of the curved display device may be further improved.

If a front glass of a touchable bezel-less display device has a flat surface only, a front glass may be supported/secured by double-sided tape at the edges, such as for providing visual coherence and/or suppressing loss of touchable area. The bezel-less display devices that rely on such double-sided tape for support/securing of the front glass may become less structurally stable as they become larger, i.e., the risk of accidents such as the front glass escaping/slipping may increase. The accidents may be due to the increased the self-weight of the front glass as the screens of the touchable bezel-less display devices increase in size. Furthermore, if the front glass of the touchable bezel-less display device is a front glass with curved edges, the display panel for the curved edges may be supported/secured by magnets disposed behind the display panel. If the panels disposed on the curved edges are supported/secured using magnets, the designable curvature range of the curved edges may become more restrictive, and the cost of manufacturing/assembly for the structure may become more expensive, also. If the panels disposed on the curved edges are supported/secured using magnets, the designable curvature range of the curved edges becomes more limited, and the manufacturing/assembly of the associated structure becomes more expensive.

In contrast, the curved display device according to one embodiment of the present disclosure may comprise supporting mechanism that improve the structural stability of the coverglass 10. By such supporting mechanism, the curved display device according to one embodiment of the present disclosure may have better structural stability compared to the touchable bezel-less display devices. Such a supporting mechanism may be, for example, a support by the bracket 21 having a protruding portion in front of the coverglass 10. Specifically, the coverglass 10 can be supported/fixed by the protruding portion of the bracket 21 that protrudes from at least two edges that are not curved portions D2 and that has a portion that overlaps vertically with the top surface of the coverglass 10.

For example, one supporting mechanism of the curved display device according to one embodiment of the present disclosure may be implemented by a main display module that is coupled to the bracket 21. The main display module may be bonded to the bottom surface of the planar portion D1 of the coverglass 10 via a double-sided tape DST. Since the main display module is thus coupled with the bracket 21, the coverglass 10 may be supported/secured through other parts than the edge that are not curved portions D2.

For example, one supporting mechanism for the curved display device according to one embodiment of the present disclosure may be implemented by a backcover 22 that is fastened with the bracket 21. Since the bracket 21 that has an overlapped protrusion in front of the coverglass 10 is also coupled to the main display module, and since the bracket 21 is coupled to the backcover 22, the load by the self-weight of the coverglass 10 may be dispersed through the structure of the curved display device. This dispersion of the load may improve the structural stability of the curved display device according to one embodiment of the present disclosure.

When the aforementioned supporting mechanisms are applied to the curved display device in combination, the curved display device according to one embodiment of the present disclosure may improve significantly structural stability of the curved display device, compared to a touchable bezel-less display device not having such supporting mechanisms. Furthermore, while the curved display device according to one embodiment of the present disclosure has improved structural stability, the degree of design freedom of the coverglass 10 and corresponding parts may be significantly increased because the panel of the curved portion D2 is a panel manufactured with a technology that may be easily placed on a curved surface, such as iLED technology or oLED technology. For example, the curvature of the coverglass 10 may have various values. In other words, the designable shapes may be diversified, which may improve the product value of the curved display device.

In the curved display device according to one embodiment of the present disclosure, the touch-sensing layer (TSL) may be a metal mesh as an electrode formed on the bottom surface of the coverglass 10 by employing capacitive touch technology. Using metal mesh as electrodes in a touch-sensitive layer (TSL) may provide large-area displays touch-sensitive capabilities at a lower cost than traditional indium tin oxide (ITO) transparent electrodes. When a metal mesh is used as an electrode, the electrode may be organized, for example, by metal wires spaced apart from each other and metal wires spaced apart from each other but orthogonal to such metal wires.

However, the implementation of the metal mesh is not limited thereto, and the metal mesh may be implemented in various ways as needed or desired. For example, a first grooves spaced apart from each other and a second grooves spaced apart from each other and disposed perpendicularly to the first grooves may be formed in the region corresponding to the touch-sensing layer TSL of the coverglass 10. By filling inside of both the first and the second grooves with metal, a metal mesh comprising metal lines may be implemented without adding the thickness of the touch-sensing layer TSL to the coverglass 10.

In the curved display device according to one embodiment of the present disclosure, the metal mesh, which is an electrode of the touch-sensing layer TSL disposed on the bottom surface of the coverglass 10, may have a different mesh size in the region corresponding to the planar portion D1 than the mesh size in the region corresponding to the curved portion D2. The individual metal lines comprising the metal mesh may be thin and spaced apart from each other, but may not be transparent.

When a user stares at an area corresponding to the planar portion D1, the angle formed between the user's line of sight and the top surface of the coverglass 10 may not be large. Since the angle formed between the user's line of sight and the top surface of the coverglass 10 is not large, the number of metal lines/metal wires recognized by the user is not large, and the spacing between the metal lines/metal wires may not be small. Therefore, the metal lines/metal wires may not be easily recognized if a user standing in front of the curved display device looks at the area corresponding to the planar portion D1. In the case of that a user standing in front of the curved display device is standing, the angle formed between the user's line of sight toward the center of the planar portion D1 and the top surface of the coverglass 10 may be nearly 90 degrees. However, when a user standing stares at the area corresponding to the curved portion D2, the angle between the user's line of sight and the top surface of the coverglass 10 may decrease. When the user is looking at the area corresponding to the curved portion D2, the number of metal lines/metal wires may increase and the spacing between the metal lines/metal wires may decrease compared to when the user is looking at the area corresponding to the planar portion D1. Therefore, as the angle formed between the user's line of sight and the top surface of the coverglass 10 decreases, the density of the metal mesh exposed to the user's line of sight may increase even if the area observed by the user remains the same. When the density of the metal mesh exposed to the user's line of sight on the top surface of the coverglass increases, the probability that the metal mesh will be recognized by the user may increase. When the density of the metal mesh recognized by the user increases, a portion of the image reaching the user from the panel located behind the metal mesh (from the perspective of the user standing in front of the curved display device) may be obscured.

In the curved display device according to one embodiment of the present disclosure, the metal mesh that is an electrode of the touch-sensing layer TSL disposed on the bottom surface of the coverglass 10 may have a mesh size of the area corresponding to the curved portion D2 larger than the mesh size of the area corresponding to the planar portion D1. In other words, the mesh density of the area corresponding to the curved portion D2 may be smaller than the mesh density of the area corresponding to the planar portion D1. In this way, when the mesh density of the area corresponding to the curved portion D2 is smaller than the mesh density of the area corresponding to the planar portion D1, the increase in the mesh density of the metal mesh perceived by the user may be compensated by a decrease in the physical mesh density. By the adjusting the mesh size according to the area, the visibility of the image reaching the user from the curved portion D2 may be significantly improved even when a non-transparent metal mesh is used as the electrode.

The features of the above-described embodiments may be combined with each other as long as they are not in conflict. For example, the feature related to the mesh size of the touch sensing layer (TSL) may be applied to the curved display device shown in FIG. 8 to 10.

Although the description has been made above with reference to an embodiment of the present disclosure, it may be understood that those skilled in the art or those having ordinary knowledge in the art may variously modify and change the present disclosure without departing from the spirit and technical scope of the present disclosure described in the appended claims.

Accordingly, the technical scope of the present disclosure is not limited to the detailed description of the specification, but should be defined by the appended claims.

## Claims

1. A curved display device comprising:
a coverglass comprising: a planar portion; and a curved portion that extends from each of a pair of opposite edges of the planar portion and is bent toward a direction in which a bottom surface of the planar portion faces;
a housing provided under the coverglass and providing a receiving space;
a main display module received in the housing, provided under the planar portion, and comprising a main display panel; and
an auxiliary display module received in the housing, provided under the curved portion, and comprising an auxiliary display panel,
wherein the main display panel and the auxiliary display panel at least partially overlap with each other, and
wherein the coverglass comprises: a touch-sensing layer provided on a bottom surface of the coverglass and covering the planar portion and at least a portion of the curved portion.

2. The curved display device of claim 1, wherein the curved portion of the coverglass has longitudinal edges, and the remaining edges of the coverglass has transverse edges,
wherein the housing comprises a bracket, and
wherein the bracket covers at least portions of side portions corresponding to the transverse edges.

3. The curved display device of claim 2, wherein the bracket covers side surfaces of the transverse edges, extends from each of the side surfaces of the transverse edges to protrude above a top surface of the coverglass, and is bent toward a center portion of the coverglass to cover at least a portion of the top surface of the coverglass.

4. The curved display device of claim 3, wherein the housing further comprises a backcover disposed at a bottom surface of the curved display device, and
wherein the backcover is in contact with and fastened with the bracket.

5. The curved display device of claim 4, wherein the main display module further comprises: a panel module case supporting the main display panel and enclosing a lower portion of the main display panel, and
wherein the panel module case is joined to the bracket.

6. The curved display device of claim 5, wherein the housing further comprises: a module case support provided between the panel module case and the bracket and joined to the panel module case and the bracket.

7. The curved display device of claim 5, wherein the auxiliary display module further comprises: an auxiliary display guide supporting a bottom surface of the auxiliary display panel and supporting a bottom surface of at least a portion of the panel module case.

8. The curved display device of claim 7, wherein the auxiliary display guide is in contact with and is fastened with the backcover.

9. The curved display devices of claim 7, wherein the housing further comprises: a cover-side supporting the panel module case and the auxiliary display guide,
wherein an upper portion of the cover-side at least partially contacts the panel module case and the auxiliary display guide, and
wherein a lower portion of the cover-side at least partially contacts the backcover and is fastened with the backcover.

10. The curved display device of claim 7, wherein the auxiliary display panel is adjacent to a bottom surface of the curved portion and is bent along the bottom surface of the curved portion,
wherein the auxiliary display guide includes:
an arc region contacting the bottom surface of the auxiliary display panel; and
a flat region connected to one, facing the backcover, of opposite ends of the arc region and extending toward a center portion of the coverglass,
wherein the auxiliary display module further comprises: an auxiliary display controller of which at least a portion is provided under the flat region, and
wherein another portion of the auxiliary display controller extends along a bottom surface of the flat region toward a connection portion of the arc region and the flat region, is bent along the connection portion of the arc region and the flat region, and is connected to one, facing the backcover, of opposite edges of the auxiliary display panel.

11. The curved display device of claim 10, wherein the housing further comprises: a clip disposed in an overlapping region of the main display panel and the auxiliary display panel,
wherein a top surface of the clip is adjacent to a bottom surface of the auxiliary display panel, and
wherein a bottom surface of the clip is adjacent to a top surface of the main display panel.

12. The curved display device of claim 7, further comprising: a non-magnetic adhesive member between the auxiliary display guide and the auxiliary display panel,
wherein the auxiliary display guide is formed of a metal, and
wherein the auxiliary display guide and the auxiliary display panel are joined by the non-magnetic adhesive member.

13. The curved display device of claim 2, further comprising: a molding member covering at least a portion of the housing and at least a portion of the coverglass,
wherein the molding member is provided on the longitudinal edges, and
wherein the molding member is connected to at least a portion of the curved portion and at least a portion of the housing.

14. The curved display device of claim 13, wherein the housing further comprises: a backcover disposed at a bottom surface of the curved display device,
wherein the backcover is in contact with and fastened with the bracket, and
wherein the molding member is further connected to at least a portion of the backcover.

15. The curved display device of claim 14, wherein the housing further comprises a backcover disposed at a bottom surface of the curved display device,
wherein the backcover is in contact with and fastened with the bracket, and
wherein the molding member is further connected to at least a portion of the backcover.

16. The curved display device of claim 15, wherein the main display module further comprises: a panel module case supporting the main display panel and enclosing a lower portion of the main display panel, and
wherein the panel module case is connected to the bracket.

17. The curved display device of claim 16, wherein the auxiliary display module further comprises: an auxiliary display guide supporting a bottom surface of the auxiliary display panel and supporting a bottom surface of at least a portion of the panel module case,
wherein the housing further comprises: a cover-side supporting the panel module case and the auxiliary display guide,
wherein an upper portion of the cover-side at least partially contacts the panel module case and the auxiliary display guide,
wherein a lower portion of the cover-side at least partially contacts the backcover and is fastened with the backcover, and
wherein the molding member is further connected to the cover-side.

18. The curved display device of claim 17, further comprising:
a non-magnetic adhesive member between the auxiliary display guide and the auxiliary display panel,
wherein the auxiliary display guide is formed of metal,
wherein the auxiliary display guide and the auxiliary display panel are joined by the non-magnetic adhesive member, and
wherein the molding member is joined to the backcover with an adhesive layer interposed therebetween.

19. The curved display device of claim 1, wherein the auxiliary display panel is an LED panel.

20. The curved display device of claim 1, wherein the touch-sensing layer comprises: a metal mesh as an electrode, and
wherein a mesh size of a region, corresponding to the curved portion, of the metal mesh is different from a mesh size of a region, corresponding to the planar portion, of the metal mesh.
